(19) Europäisches Patentamt
European Patent Office
Office européen des brevets

(11) EP 2 598 929 B1

(12) FASCICULE DE BREVET EUROPEEN

(45) Date de publication et mention
de la délivrance du brevet:
**14.01.2015 Bulletin 2015/03**

(21) Numéro de dépôt: **11735416.7**

(22) Date de dépôt: **12.07.2011**

(51) Int Cl.:
***G02B 7/02*** ^(2006.01)

(86) Numéro de dépôt international:
**PCT/EP2011/061874**

(87) Numéro de publication internationale:
**WO 2012/013491 (02.02.2012 Gazette 2012/05)**

(54) **DISPOSITIF D'ATHERMALISATION MECANIQUE PASSIVE, SYSTEME OPTIQUE ASSOCIE**

PASSIVES MECHANISCHES ATHERMALISATIONSVORRICHTUNG UND ZUGEHÖRIGES OPTISCHES SYSTEM

PASSIVE MECHANICAL ATHERMALIZATION DEVICE, AND RELATED OPTICAL SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.07.2010 FR 1056342**

(43) Date de publication de la demande:
**05.06.2013 Bulletin 2013/23**

(73) Titulaire: **Sagem Défense Sécurité**
**92100 Boulogne-Billancourt (FR)**

(72) Inventeur: **DONCE, Lucien**
**F-75015 Paris (FR)**

(74) Mandataire: **Regimbeau**
**20, rue de Chazelles**
**75847 Paris Cedex 17 (FR)**

(56) Documents cités:
**EP-A2- 1 014 139        EP-A2- 1 172 676**
**DE-A1-102006 060 088   US-A- 5 210 650**
**US-A1- 2010 165 492     US-B1- 6 188 841**
**US-B1- 6 631 040         US-B1- 6 650 412**

# Description

## DOMAINE TECHNIQUE GENERAL

L'invention concerne un dispositif d'athermalisation mécanique passive comportant un barillet, formé d'un premier matériau ayant un premier coefficient de dilatation thermique et présentant un axe longitudinal, comportant au moins une première partie et au moins une deuxième partie.

L'invention concerne également un système optique comportant un tel dispositif d'athermalisation passive.

## ETAT DE L'ART

Tous les systèmes optiques infrarouges, notamment dans les dispositifs autodirecteurs et les jumelles, doivent garantir une stabilité de performances dans des environnements sévères, et particulièrement en température.

Or les matériaux optiques utilisés dans l'infrarouge, tel que le germanium, créent des défocalisations thermiques par de forts changements d'indice de réfraction lorsque la température varie.

Des dispositifs d'athermalisation optique passive existent, et utilisent en général au moins trois matériaux optiques différents (par exemple Ge, ZnSe, AsGa) pour compenser les défocalisations optiques.

Les structures support des lentilles en matériaux optiques, généralement en aluminium, créent également des défocalisations avec une variation de la température. Les défocalisations peuvent être de l'ordre de 100 à 300 μm, pour une variation de la température de 85°C.

Des dispositifs d'athermalisation mécanique passive existent, et utilisent en général au moins deux matériaux différents (par exemple l'invar et l'aluminium) pour compenser les défocalisations mécaniques.

Les dispositifs d'athermalisation mécanique des systèmes optiques infrarouges sont généralement composés de deux sous-ensembles.

Le premier sous-ensemble supporte les lentilles optiques formées dans les matériaux optiques, et le deuxième sous-ensemble supporte le capteur infrarouge du système optique infrarouge.

Ces deux sous-ensembles sont reliés par une pièce de liaison dont la définition géométrique et le matériau sont choisis pour compenser les défocalisations par déplacement relatif des deux sous-ensembles, proportionnellement aux différences des coefficients de dilatation des matériaux.

Ce type d'architecture demande une grande précision dans la réalisation des pièces pour garantir la qualité des images optiques.

De plus les jeux de montages des sous-ensembles induisent des erreurs dans les alignements, notamment en coaxialité et en perpendicularité. Les coûts de réalisation pour obtenir la précision requise dans les systèmes sont rapidement très élevés.

L'encombrement de la pièce de liaison est du même ordre de grandeur que celui des deux sous-ensembles, ce qui implique un encombrement élevé.

US-A-5 210 650 divulgue un dispositif selon le préambule de la revendication 1.

US-A-6 650 412 divulgue un dispositif de compensation thermique pour un appareil optique.

## PRESENTATION DE L'INVENTION

L'invention propose de pallier au moins un de ces inconvénients.

A cet effet, on propose selon l'invention un dispositif selon la revendication 1.

L'invention est avantageusement complétée par les caractéristiques des revendications dépendantes, prises seules ou en une quelconque de leur combinaison techniquement possible.

L'invention concerne également un système optique comportant un tel dispositif d'athermalisation passive.

L'invention présente de nombreux avantages.

Du fait que la première partie et la deuxième partie sont reliées par des poutres circonférentiellement à l'axe longitudinal du barillet, il n'y a que peu d'assemblages précis à réaliser.

Dans le cas très avantageux où la première partie, la deuxième partie et les au moins trois poutres sont monobloc, il n'y a pas d'assemblage précis à réaliser. Ainsi, toutes les localisations des lentilles, du détecteur et des poutres sont réalisées sur le barillet, ce qui apporte une réduction des coûts de réalisation.

Dans tous les cas, les précisions de localisation des lentilles et du détecteur sont plus facilement vérifiées que dans l'art antérieur.

Le système optique est plus compact, et son intégration dans des plateformes oscillantes selon deux axes est facilitée, du fait de la plus faible masse et de la plus faible inertie.

Les barres sont peu encombrantes et ne nécessitent que peu de précision lors de leur fabrication, car elles n'assurent que la fonction de dilatation thermique contrôlée. Plus leur longueur est importante, plus la précision de fabrication peut être diminuée : en effet la tolérance sur leur longueur influence peu la variation de la longueur lors de la variation de température.

L'invention permet de plus un réglage fin d'un angle entre un plan contenant un détecteur et l'axe longitudinal du barillet.

## PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- les figures 1 à 3 représentent schématiquement un mode de réalisation possible d'un dispositif selon l'invention ;
- la figure 4 représente schématiquement un autre mode de réalisation possible d'un dispositif selon l'invention ;
- les figures 5 et 6 représentent schématiquement des moyens pour un réglage d'un angle entre un plan d'une deuxième partie du barillet et l'axe longitudinal du barillet.

Sur l'ensemble des figures, les éléments similaires portent des références numériques identiques.

DESCRIPTION DETAILLEE

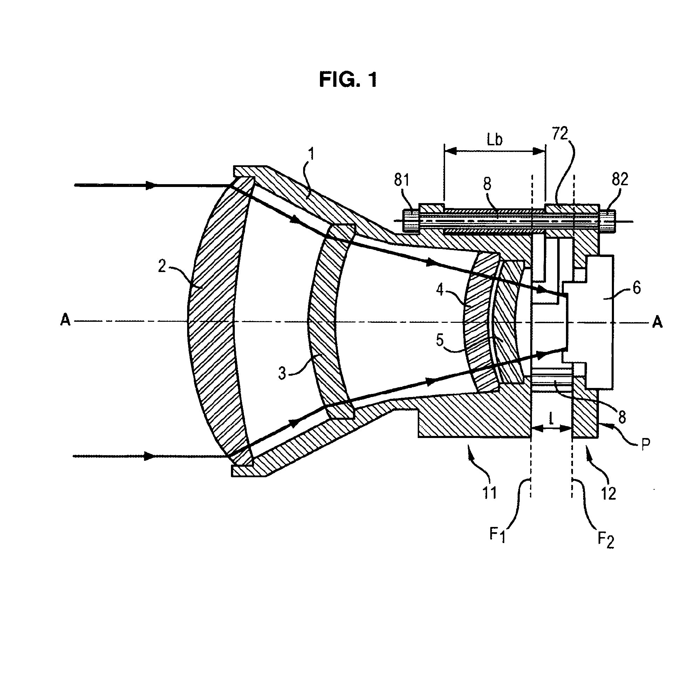

Comme le montrent les figures 1 à 4, un dispositif d'athermalisation mécanique passive selon l'invention comporte principalement un barillet 1, au moins trois poutres 7, et au moins trois barres 8.

Le barillet 1 est formé d'un premier matériau ayant un premier coefficient $\lambda 1$ de dilatation thermique et présentant un axe longitudinal (AA).

Le premier matériau est par exemple de l'aluminium. Son coefficient de dilatation thermique $\lambda 1$ est donc de $23,8 \times 10^{-6}$.

Le barillet 1 comporte au moins une première partie 11 et au moins une deuxième partie 12. Avantageusement, le barillet 1 est de forme généralement cylindrique.

De manière non limitative, la première partie 11 est avantageusement une partie de support d'un dispositif optique 10 comportant une pluralité de lentilles référencées par 2, 3, 4, et 5, formées d'un matériau optique.

Les lentilles 2, 3, 4 et 5 peuvent être en un matériau optique infrarouge, par exemple Ge, ZnSe, AsGa, et le détecteur 6 optique peut être un détecteur infrarouge.

De manière non limitative, la deuxième partie 12 est une partie de support d'un détecteur 6 optique, dans le domaine visible ou infrarouge.

Le barillet peut également comporter n empilements de paires de parties 11 et 12, la première partie 11 de l'empilement de rang n étant la deuxième partie 12 de l'empilement n+1 par exemple.

Les au moins trois poutres 7 sont également formées du premier matériau. Les poutres 7 peuvent être rapportées sur la première partie 11 et la deuxième partie 12 (par soudage par exemple), mais de manière très préférentielle, les poutres 7 sont venues de matière sur la première partie 11 et la deuxième partie 12 : la première partie 11, la deuxième partie 12 et les au moins trois poutres 7 sont ainsi monobloc.

Chacune des poutres 7 relie la première partie 11 et la deuxième partie 12, en s'étendant circonférentiellement par rapport à l'axe longitudinal (AA). Dans la suite de la présente description, on entend par « circonférentiellement » selon une direction C à la fois

- perpendiculaire à l'axe longitudinal (AA), et
- perpendiculairement à un axe radial (BB) au barillet 1, perpendiculaire à l'axe longitudinal (AA).

En d'autres termes, si la première partie 11 forme un cylindre centré autour de l'axe (AA) et ayant une face F1, et si la deuxième partie 12 forme un cylindre centré autour de l'axe (AA) et ayant une face F2, chaque poutre 7 relie la première partie 11 et la deuxième partie 12 en formant un S dont les extrémités sont reliées respectivement à la première partie 11 et à la deuxième partie 12.

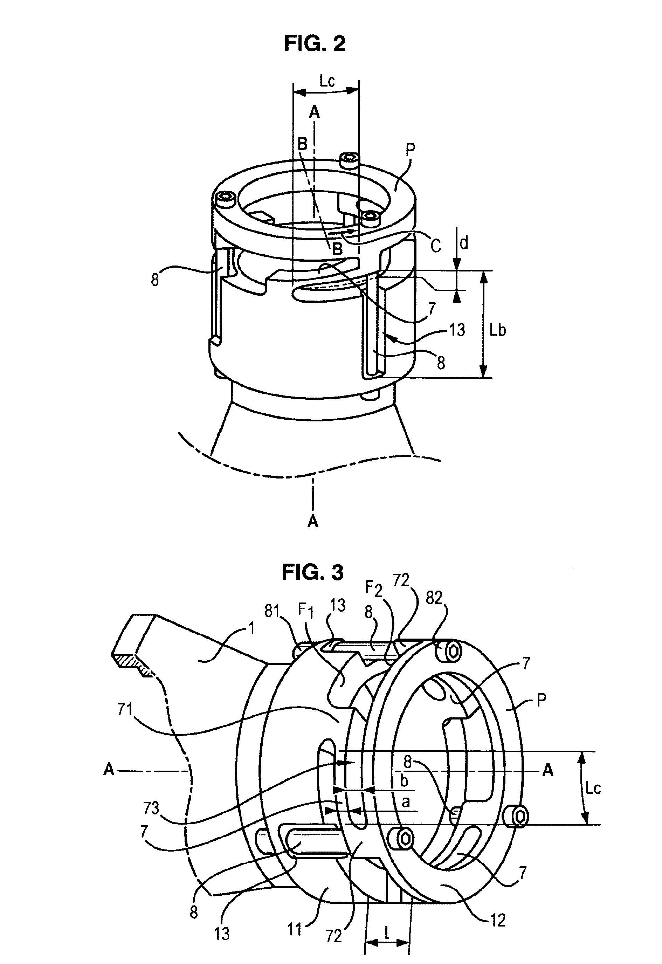

Comme le montrent les figures 2 et 3, il existe un espace entre la poutre 7 et les faces F1 et F2.

Par exemple, la partie centrale de la poutre 7 en forme de S est sensiblement parallèle aux faces F1 et F2. Ainsi, en partant de la face F1 de la première partie 11, chaque poutre 7 comporte un coude 71 s'étendant parallèlement à l'axe (AA), puis une partie centrale 73 s'étendant parallèlement à la face F1, puis un coude 72 s'étendant parallèlement à l'axe (AA) pour rejoindre la face F2 du cylindre de la deuxième partie 12.

Comme le montre la figure 3, la partie centrale 73 a une longueur curviligne référencée par Lc, et une section droite, par exemple rectangulaire, de surface axb.

Les au moins trois barres 8 sont quant à elles formées d'un deuxième matériau ayant un deuxième coefficient $\lambda 2$ de dilatation thermique, différent du premier coefficient $\lambda 1$ de dilatation thermique.

Comme le montrent les figures 2 et 3, les barres 8 sont distinctes les unes des autres.

On a avantageusement :

$$\lambda 1 \succ \lambda 2$$

Le deuxième matériau est par exemple de l'acier. Son coefficient de dilatation thermique $\lambda 2$ est donc de $12,0 \times 10^{-6}$.

Les barres 8 sont réparties circonférentiellement autour du barillet 1 par rapport à l'axe longitudinal (AA).

Chaque barre 8 relie la première partie 11 et la deuxième partie 12, axialement par rapport à l'axe longitudinal (AA).

A cet effet, des extrémités 81 et 82 des barres 8 sont respectivement fixées de façon solidaire d'une part à la première partie 11 et d'autre part à la deuxième partie 12 par des moyens conventionnels, tels que vissage, sertissage ou collage.

Comme le montre la figure 1, chaque barre 8 a une longueur référencée par Lb entre la première partie 11 et la deuxième partie 12, et une section droite, par exemple hexagonale, de surface S8.

Pour déterminer le déplacement relatif de la première partie 11 et de la deuxième partie 12, nécessaire à la compensation de la défocalisation mécanique due à une variation de température, la longueur Lb et la surface S8 sont choisies (pour un deuxième matériau donné comme par exemple l'acier) en fonction de la longueur Lc et la surface axb (pour un premier matériau donné comme par exemple l'aluminium), de sorte qu'une dilatation thermique du barillet 1 se traduise par une déformation des poutres 7 et des barres 8 selon l'axe longitudinal (AA). Par conséquent, une dilatation thermique du barillet 1 se traduit par un déplacement de la première partie 11 par rapport à la deuxième partie 12 selon l'axe longitudinal (AA), pour compenser la défocalisation.

Le choix précité de la longueur Lb et de la surface S8 en fonction de la longueur Lc et la surface axb s'effectue de manière connue de l'homme du métier par une modélisation par éléments finis, et n'est pas décrite dans la présente description.

Bien entendu, dans le cas d'un système optique, la détermination précitée dépend également du positionnement des lentilles et du détecteur dans le barillet 1.

Dans tous les cas, la déformation des poutres 7 s'effectue dans des conditions d'élasticité du premier matériau, et elle est donc élastique et réversible : le barillet revient à sa position initiale lorsque que la température revient à sa valeur initiale.

On comprend que lorsque la température du système évolue, les trois barres 8, reliées à la première partie 11, exercent, à cause de la variation de la longueur Lb de chaque barre 8, toutes les trois une force identique sur la deuxième partie 12, reliée à une extrémité de chaque poutre 7. Or la variation de longueur de Lb est différente de la variation de longueur Lc de chaque poutre 7, du fait de la différence entre le premier matériau et le deuxième matériau.

La résultante de ces forces est une déformation des poutres 7 et des barres 8 selon l'axe longitudinal (AA) et un déplacement d (voir la figure 2) de la première partie 11 par rapport à la deuxième partie 12 selon l'axe longitudinal (AA), pour compenser la défocalisation.

La rigidité de la première partie 11 doit être suffisante pour minimiser les déformations locales à l'encastrement des poutres 7.

Les au moins trois barres 8 sont de préférence réparties régulièrement circonférentiellement autour du barillet 1 par rapport à l'axe longitudinal (AA), pour des raisons de symétrie.

De la même façon, les au moins trois poutres 7 sont réparties régulièrement circonférentiellement autour du barillet 1 par rapport à l'axe longitudinal (AA).

Dans le cas où le dispositif comporte trois barres 8, elles sont régulièrement réparties entre elles à 120° autour de l'axe (AA). Dans ce cas également, le dispositif comporte trois poutres 7 régulièrement réparties entre elles à 120° autour de l'axe (AA).

Le dispositif peut également comporter quatre barres, régulièrement réparties à 90° autour de l'axe (AA), ainsi que quatre poutres, régulièrement réparties à 90° autour de l'axe (AA).

D'une manière générale et comme le montre la figure 2 par exemple, le nombre maximal de poutres 7 réparties circonférentiellement autour du barillet 1 est égal à la longueur circonférentielle du barillet 1 divisée par la longueur circonférentielle d'une poutre : les poutres 7 se suivent en effet selon la circonférence du barillet 7, et sont distinctes les unes des autres.

D'une manière générale également, le nombre maximal de barres 8 réparties circonférentiellement autour du barillet 1 est égal au nombre maximal de poutres 7.

De manière préférentielle, comme le montrent les figures 2 et 3, le dispositif comporte un nombre de poutres 7 égal au nombre de barres 8.

Les poutres 7 et les barres 8 peuvent être décalées les unes par rapport aux autres, ou coïncider.

Dans ce dernier cas, les figures 2 et 3 montrent que chaque barre 8 peut être disposée dans une échancrure 13 du barillet 1. L'échancrure 13 est par exemple dans le prolongement géométrique du coude 72 de la poutre 7.

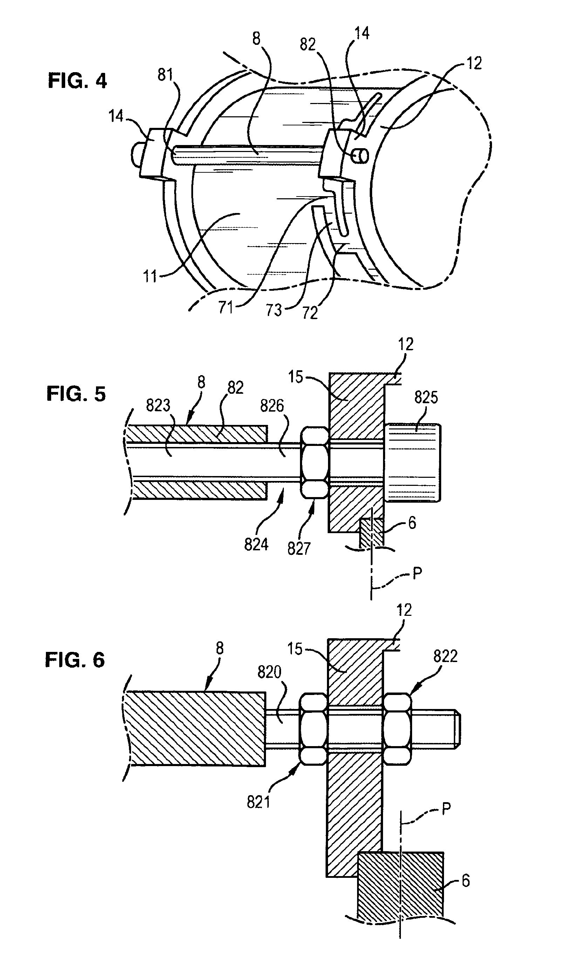

La figure 4 représente un autre mode de réalisation selon lequel chaque barre 8 est disposée entre deux languettes 14 du barillet 1, et non dans une échancrure.

Les languettes 14 sont préférentiellement venues de matière sur la première partie 11 et la deuxième partie 12. Des extrémités 81 et 82 des barres 8 sont fixées de façon solidaire d'une part à la première partie 11 et d'autre part à la deuxième partie 12, par l'intermédiaire des languettes 14, par des moyens conventionnels tels que vissage, sertissage ou collage.

Dans le cas où un système optique comporte un détecteur 6 optique, infrarouge par exemple, sur la deuxième partie 12, la deuxième partie 12 définit un plan P sécant à l'axe longitudinal (AA), qui est aussi dans ce cas l'axe optique.

Il est alors souhaitable de pouvoir effectuer un réglage d'un angle entre le plan P et l'axe longitudinal (AA) (également appelé angle de « tilt » par l'homme du métier).

A cet effet, et comme le montrent les figures 5 et 6, au moins une barre 8 comporte une extrémité 82 réglable reliée à la deuxième partie 12, la deuxième partie 12 comportant quant à elle une pièce 15 de coopération avec la barre 8. De préférence, au moins trois barres 8 comportent une telle extrémité réglable.

On comprend que la pièce 15 peut par exemple comporter le coude 72 (cas des figures 1 à 3 par exemple), ou la languette 14 (cas de la figure 4 par exemple).

Comme le montre la figure 5, l'extrémité 82 comporte un alésage taraudé 823 pour une coopération avec une tige 826 d'une vis 824 comportant également une tête 825. La tige 826 coopère en outre avec un contre-écrou 827.

La pièce 15 solidaire de la deuxième partie 12 est alésée, la tige 826 passant dans l'alésage de la pièce 15. La tête 825 et le contre-écrou 827 sont répartis de part et d'autre de la pièce 15. Grâce au vissage de la vis 824 dans l'alésage 823, la tête 825 venant en butée contre la pièce 15, il est possible d'effectuer un réglage d'un angle entre le plan P et l'axe longitudinal (AA). Le contre-écrou 827 venant en butée contre la pièce 15 permet la solidarisation de la tige 8 avec la deuxième partie 12.

Selon une variante représentée en figure 6, l'extrémité 82 comporte une tige filetée 820 saillante pour une coopération avec deux écrous 821 et 822. La pièce 15 solidaire de la deuxième partie 12 est alésée, la tige 820 passant dans l'alésage de la pièce 15. Les deux écrous 821 et 822 sont répartis de part et d'autre de la pièce 15 de coopération. Grâce au déplacement de l'écrou 821 sur la tige 820, l'écrou 821 venant en butée contre la pièce 15, il est possible d'effectuer un réglage d'un angle entre le plan P et l'axe longitudinal (AA). L'écrou 821 venant en butée contre la pièce 15 permet la solidarisation de la tige 8 avec la deuxième partie 12.

Selon des variantes non représentées, les réglages de l'angle entre le plan P et l'axe longitudinal (AA) peuvent être orientés vers la partie 11, au lieu de vers la partie 12 comme représenté sur les figures 5 et 6, pour des raisons de commodités d'intégration par exemple.

## Revendications

1. Dispositif d'athermalisation mécanique passive comportant :

    - un barillet (1), formé d'un premier matériau ayant un premier coefficient ($\lambda_1$) de dilatation thermique et présentant un axe longitudinal (AA) et un axe radial (BB), perpendiculaire à l'axe longitudinal (AA), le barillet (1) comportant au moins une première partie (11) et au moins une deuxième partie (12),
    le dispositif étant **caractérisé en ce qu'**il comporte
    - au moins trois poutres (7) formées du premier matériau, chacune des poutres (7) reliant la première partie (11) et la deuxième partie (12), en s'étendant circonférentiellement par rapport à l'axe longitudinal (AA), selon une direction (C) perpendiculaire à l'axe longitudinal (AA) et à l'axe radial (BB), et comportant des coudes (71, 72) s'étendant parallèlement à l'axe longitudinal (AA),
    - au moins trois barres (8), formées d'un deuxième matériau ayant un deuxième coefficient de dilatation thermique ($\lambda_2$), différent du premier coefficient de dilatation thermique, et réparties circonférentiellement autour du barillet (1) par rapport à l'axe longitudinal (AA), chaque barre (8) reliant la première partie (11) et la deuxième partie (12), axialement par rapport à l'axe longitudinal (AA),

de sorte qu'une dilatation thermique du barillet (1) se traduise par une déformation des poutres (7) et des barres (8) selon l'axe longitudinal (AA).

2. Dispositif selon la revendication 1, dans lequel

    - la première partie (11) est une partie de support d'un dispositif optique (10) comportant au moins une lentille (2, 3, 4, 5) formée d'un matériau optique, et
    - la deuxième partie (12) est une partie de support d'un détecteur (6) optique.

3. Dispositif selon l'une des revendications 1 ou 2, dans lequel la première partie (11), la deuxième partie (12) et les au moins trois poutres (7) sont monobloc.

4. Dispositif selon l'une des revendications 1 à 3, comportant au moins trois barres (8) et au moins trois poutres (7) réparties régulièrement circonférentiellement autour du barillet (1) par rapport à l'axe longitudinal (AA).

5. Dispositif selon l'une des revendications 1 à 4, dans lequel chaque barre (8) est disposée dans une échancrure (13) du barillet (1).

6. Dispositif selon l'une des revendications 1 à 4, dans lequel chaque barre (8) est disposée entre deux languettes (14) du barillet (1).

7. Dispositif selon l'une des revendications 1 à 6, dans lequel la deuxième partie (12) définit un plan (P) sécant à l'axe longitudinal (AA).

8. Dispositif selon la revendication 7, dans lequel

    - au moins une barre (8) comporte une extrémité (82) réglable reliée à la deuxième partie (12),
    - la deuxième partie (12) comporte une pièce (15) de coopération avec la barre (8),
    l'extrémité (82) comportant une tige filetée (820) saillante pour une coopération avec deux écrous (821, 822) répartis de part et d'autre de la pièce (15) de coopération,
    pour permettre un réglage d'un angle entre le plan (P) et l'axe longitudinal (AA).

9. Dispositif selon la revendication 7, dans lequel

    - au moins une barre (8) comporte une extrémité (82) réglable reliée à la deuxième partie (12),
    - la deuxième partie (12) comporte une pièce (15) de coopération avec la barre (8),
    l'extrémité (82) comportant un alésage taraudé (823) pour une coopération avec une tige (826) d'une vis (824) comportant également une tête (825), la tige (826) coopérant en outre avec un contre-écrou (827),

la tête (825) et le contre-écrou (827) étant répartis de part et d'autre de la pièce (15) de coopération,

pour permettre un réglage d'un angle entre le plan (P) et l'axe longitudinal (AA).

10. Système optique comportant

- au moins un dispositif optique (10) comportant au moins une lentille (2, 3, 4, 5) formée d'un matériau optique;
- un détecteur (6) optique,

le système optique étant **caractérisé en ce qu'**il comporte un dispositif selon l'une des revendications 1 à 9.

**Patentansprüche**

1. Vorrichtung zur passiven mechanischen Athermalisation mit:

- einer Trommel (1), die aus einem ersten Material mit einem ersten Wärmeausdehnungskoeffizienten (λ1) gebildet ist und eine Längsachse (AA) und eine Radialachse (BB), die zu der Längsachse (AA) senkrecht ist, aufweist, wobei die Trommel (1) mindestens einen ersten Teil (11) und mindestens einen zweiten Teil (12) umfasst,

wobei die Vorrichtung **dadurch gekennzeichnet ist, dass** sie Folgendes umfasst:
- mindestens drei Träger (7), die aus dem ersten Material gebildet sind, wobei jeder der Träger (7) den ersten Teil (11) und den zweiten Teil (12) verbindet, indem er sich relativ zu der Längsachse (AA) umfänglich in einer Richtung (C) erstreckt, die zu der Längsachse (AA) und zu der Radialachse (BB) senkrecht ist, und Kröpfungen (71, 72) aufweist, die sich parallel zu der Längsachse (AA) erstrecken,
- mindestens drei Stäbe (8), die aus einem zweiten Material mit einem zweiten Wärmeausdehnungskoeffizienten (λ2) gebildet sind, der von dem ersten Wärmeausdehnungskoeffizienten verschieden ist, und die relativ zu der Längsachse (AA) umfänglich um die Trommel (1) herum verteilt sind, wobei jeder Stab (8) den ersten Teil (11) und den zweiten Teil (12), in axialer Richtung relativ zu der Längsachse (AA), verbindet, derart, dass eine Wärmeausdehnung der Trommel (1) sich in einer Verformung der Träger (7) und der Stäbe (8) entlang der Längsachse (AA) niederschlägt.

2. Vorrichtung nach Anspruch 1, wobei

- der erste Teil (11) ein Trägerteil einer optischen Vorrichtung (10) ist mit mindestens einer Linse (2, 3, 4, 5), die aus einem optischen Material gebildet ist, und
- der zweite Teil (12) ein Trägerteil eines optischen Sensors (6) ist.

3. Vorrichtung nach einem der Ansprüche 1 oder 2, wobei der erste Teil (11), der zweite Teil (12) und die mindestens drei Träger (7) einstückig ausgebildet sind.

4. Vorrichtung nach einem der Ansprüche 1 bis 3, umfassend mindestens drei Stäbe (8) und mindestens drei Träger (7), die relativ zu der Längsachse (AA) umfänglich regelmäßig um die Trommel (1) herum verteilt sind.

5. Vorrichtung nach einem der Ansprüche 1 bis 4, wobei jeder Stab (8) in einem bogenförmigen Ausschnitt (13) der Trommel (1) angeordnet ist.

6. Vorrichtung nach einem der Ansprüche 1 bis 4, wobei jeder Stab (8) zwischen zwei Zungen (14) der Trommel (1) angeordnet ist.

7. Vorrichtung nach einem der Ansprüche 1 bis 6, wobei der zweite Teil (12) eine Ebene (P) definiert, welche die Längsachse (AA) schneidet.

8. Vorrichtung nach Anspruch 7, wobei

- mindestens ein Stab (8) ein einstellbares Ende (82) aufweist, das mit dem zweiten Teil (12) verbunden ist,
- der zweite Teil (12) ein Stück (15) für das Zusammenwirken mit dem Stab (8) aufweist,

wobei das Ende (82) einen vorspringenden Gewindestab (820) für ein Zusammenwirken mit zwei Muttern (821, 822) aufweist, die beiderseits des Zusammenwirkungsstücks (15) verteilt sind,

um eine Einstellung eines Winkels zwischen der Ebene (P) und der Längsachse (AA) zu ermöglichen.

9. Vorrichtung nach Anspruch 7, wobei

- mindestens ein Stab (8) ein einstellbares Ende (82) aufweist, das mit dem zweiten Teil (12) verbunden ist,
- der zweite Teil (12) ein Stück (15) für das Zusammenwirken mit dem Stab (8) aufweist,

das Ende (82) eine mit Innengewinde versehene Bohrung (823) aufweist für ein Zusammenwirken mit einem Schaft (826) einer Schraube (824), die ferner einen Kopf (825) aufweist, wobei der Schaft (826) ferner mit einer Kontermutter (827) zusammenwirkt,
wobei der Kopf (825) und die Kontermutter (827) beiderseits des Zusammenwirkungsstücks (15) verteilt sind,
um eine Einstellung eines Winkels zwischen der Ebene (P) und der Längsachse (AA) zu ermöglichen.

**10.** Optisches System mit

- mindestens einer optischen Vorrichtung (10) mit mindestens einer Linse (2, 3, 4, 5), die aus einem optischen Material gebildet ist;
- einem optischen Sensor (6),
wobei das optische System **dadurch gekennzeichnet ist, dass** es eine Vorrichtung nach einem der Ansprüche 1 bis 9 umfasst.

**Claims**

**1.** A passive mechanical athermalization device comprising:

- a barrel (1) formed of a first material having a first thermal expansion coefficient ($\lambda$1) and having a longitudinal axis (AA) and a radial axis (BB) perpendicular to the longitudinal axis (AA), the barrel (1) comprising at least one first portion (11) and at least one second portion (12),
the device being **characterized in that** it comprises
- at least three beams (7) formed of the first material, each of the beams (7) connecting the first portion (11) and the second portion (12), and extending circumferentially relative to the longitudinal axis (AA) in a direction (C) perpendicular to the longitudinal axis (AA) and to the radial axis (BB), and comprising elbows (71, 72) extending parallel to the longitudinal axis (AA),
- at least three bars (8) formed of a second material having a second thermal expansion coefficient ($\lambda$2) different from the first thermal expansion coefficient, and circumferentially distributed around the barrel (1) relative to the longitudinal axis (AA), each bar (8) connecting the first portion (11) and the second portion (12) axially relative to the longitudinal axis (AA),
so that thermal expansion of the barrel (1) translates as deformation of the beams (7) and bars (8) along the longitudinal axis (AA).

**2.** The device according to claim 1, wherein

- the first portion (11) is part of a support for an optical device (10) comprising at least one lens (2, 3, 4, 5) formed of an optical material, and
- the second portion (12) is part of a support for an optical detector (6).

**3.** The device according to one of claims 1 or 2 wherein the first portion (11), the second portion (12) and the at least three beams (7) are in a single piece.

**4.** The device according to one of claims 1 to 3, comprising at least three bars (8) and at least three beams (7) regularly distributed circumferentially around the barrel (1) relative to the longitudinal axis (AA).

**5.** The device according to one of claims 1 to 4, wherein each bar (8) is arranged in a notch (13) of the barrel (1).

**6.** The device according to one of claims 1 to 4, wherein each bar (8) is arranged between two tongues (14) of the barrel (1).

**7.** The device according to one of claims 1 to 6, wherein the second portion (12) defines a plane (P) secant to the longitudinal axis (AA).

**8.** The device according to claim 7, wherein

- at least one bar (8) comprises an adjustable end (82) connected to the second portion (12),
- the second portion (12) comprises a part (15) cooperating with the bar (8),
the end (82) comprising a projecting threaded rod (820) for cooperation with two nuts (821, 822) distributed either side of the cooperating part (15),
to allow adjustment of an angle between the plane (P) and the longitudinal axis (AA).

**9.** The device according to claim 7, wherein

- at least one bar (8) comprises an adjustable end (82) connected to the second portion (12),
- the second portion (12) comprises a part (15) cooperating with the bar (8),
the end (82) comprising a tapped bore (823) for cooperation with a shank (826) of a screw (824) also comprising a head (825), the shank (826) also cooperating with a lock-nut (827),
the head (825) and the lock-nut (827) being distributed either side of the cooperating part (15),
to allow adjustment of an angle between the plane (P) and the longitudinal axis (AA).

**10.** An optical system comprising

- at least one optical device (10) comprising at least one lens (2, 3, 4, 5) formed of an optical material;
- an optical detector (6),

the infrared device being **characterized in that** it comprises a device according to one of claims 1 to 9.

# FIG. 1

# FIG. 2

# FIG. 3

**FIG. 4**

**FIG. 5**

**FIG. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5210650 A

- US 6650412 A